# EUROPÄISCHE PATENTSCHRIFT

(11) **EP 1 059 788 B1**
(45) Veröffentlichungstag und Bekanntmachung des Hinweises auf die Patenterteilung: **31.08.2005**
(21) Anmeldenummer: 00111416.4
(22) Anmeldetag: 26.05.2000
(51) Int. Cl.: H04L 29/06

(54) **Verfahren und Anordnung zur Übertragungsaufbereitung von Echtzeitdaten**
Method and apparatus for the preparation of the transmission of realtime data
Méthode et appareil pour la préparation de la transmission de données en temps réel

(30) Priorität: 07.06.1999 DE 19925885
(43) Veröffentlichungstag der Anmeldung: 13.12.2000
(73) Patentinhaber: SIEMENS AKTIENGESELLSCHAFT, 80333 München (DE)
(72) Erfinder: Riedel, Manfred, 81246 München (DE)

(56) Entgegenhaltungen:
- WO-A-99/12329
- US-A- 5 812 534
- KOSTAS T J ET AL: "REAL-TIME VOICE OVER PACKET-SWITCHED NETWORKS" IEEE NETWORK, IEEE INC. NEW YORK, US, Bd. 12, Nr. 1, 1998, Seiten 18-27, XP000739804 ISSN: 0890-8044
- RUTSCHE E ET AL: "ARCHITECTURE OF MULTIMEDIA COMMUNICATION SUBSYSTEMS" INFORMATION NETWORKS AND DATA COMMUNICATION. PROCEEDINGS OF THE IFIP TC6 INTERNATIONAL CONFERENCE ON INFORMATION NETWORKS AND DATA COMMUNICATION, FUNCHAL, MADEIRA ISLAND, PORTUGAL, APR. 18 - 21, 1994, PROCEEDINGS OF THE IFIP TC6 INTERNATIONAL CONFERE, Bd. CONF. 5, 18. April 1994 (1994-04-18), Seiten 217-230, XP000593294 ISBN: 0-444-81869-3

## Beschreibung

Die Erfindung bezieht sich auf ein Verfahren und eine Anordnung zur Aufbereitung von Echtzeitdaten, wie beispielsweise Video- und Sprachdaten, insbesondere für den Fall, daß diese Daten über Rechnernetzwerke, wie beispielsweise das Internet mittels des Internetprotokolls IP übertragen werden sollen.

Die Übertragung von Sprachdaten über Rechnernetzwerke gewinnt insbesondere durch die Internettelefonie (Voice over IP) zunehmend an Bedeutung. Beim paketweisen Transfer von Sprachdaten ist es insbesondere wichtig, daß diese beim Empfänger zeitkonsistent aufbereitet werden, damit eine optimale Sprachqualität erzielt wird. Für die Bewältigung des anfallenden Kommunikationsaufkommens sind häufig spezielle Kommunikationsserver vorgesehen, die in Verbindung mit bereits vorhandenen Vermittlungsanlagen die Möglichkeit der Kommunikation über das Internet sicherstellen. Durch solche Kommunikationsserver kann beispielsweise die vorhandene Infrastruktur, in Form von Kupferleitungen oder ein vorhandenes ISDN (Integrated Services Digital Network) genutzt werden.

Mit zunehmender Kommunikationslast auf dem Rechnernetzwerk erhöht sich die Zahl der pro Zeiteinheit eintreffenden Kommunikationspakete, die in Form von Sprach- oder Videosignalen aufbereitet werden müssen. Dieser Sachverhalt trifft sowohl für die Sende- als auch für die Empfangsrichtung zu. Für die Datenübertragung kommen in den meisten Fällen Protokolle zur Anwendung, die nach dem ISO/OSI 7-Schichten-Modell strukturiert sind. Der Rechenaufwand für die Umsetzung des Protokollstandards ist nicht unerheblich und steigt mit der Anzahl der zu übertragenden Datenpakete (ISO 7498, ISO IS8802).

Bekannte Lösungen versuchen deshalb den Protokollumsetzungsaufwand zu minimieren, indem sie Echtzeitpakete bereits auf der Netzvermittlungsschicht (Schicht 3) aus dem Computernetz ausfiltern. In einem von der Siemens AG angebotenen Produkt "HiNet TA 1100" ist beispielsweise eine Schnittstelleneinrichtung zum direkten Endegeräteanschluß realisiert.

Aus WO 99/12329 ist ein Verfahren entsprechend dem Oberbegriff des Anspruchs 1 bekannt. In T.J. Kostas et al. "REAL-TIME VOICE OVER PACKET SWITCHED NETWORKS", IEEE Network, IEEE Inc., New York, Bd. 12, Nr. 1, 1998, Seiten 18-27, ISSN 0890-8044 ist ein Verfahren beschrieben, bei dem Echtzeitinformation einer speziell für sie vorgesehenen digitalen Signalverarbeitungseinrichtung zugeführt wird, welche die Echtzeitinformationen in Echtzeitdaten umsetzt, und bei dem die Echtzeitinformationen in Datenrahmen eingefügt werden, deren Header mit einem Kennzeichen für Echtzeitinformationen versehen werden.

Die der Erfindung zugrunde liegende Aufgabe besteht darin, ein Verfahren und eine Anordnung anzugeben, mit welchen es möglich ist, die im Zusammenhang mit der Übertragung von Echtzeitdaten erforderliche Umsetzung im Vergleich mit bekannten Lösungen zu beschleunigen.

Diese Aufgabe wird für das Verfahren gemäß den Merkmalen des Patentanspruches 1 und für die Anordnung gemäß den Merkmalen des Patentanspruches 5 gelöst. Weiterbildungen der Erfindung ergeben sich aus den abhängigen Ansprüchen.

Vorteilhaft sind für die Verarbeitung von auf dem Übertragungsmedium eintreffenden Datenrahmen erfindungsgemäß mindestens zwei Verarbeitungseinrichtungen vorgesehen, von denen die eine speziell für die Analyse der Datenrahmenkopfinformationen vorgesehen ist. Bevorzugt wird in dieser Einrichtung die Kopfinformation in einer Vergleichseinrichtung gemäß dem Standard (RTP RFC1889 IETF)über das Real Time Protokoll überprüft. Durch die zweigeteilte Ausgestaltung der Verarbeitung der Datenrahmen in Verbindung mit einer Hardwarelösung kann eine erhebliche Beschleunigung bei der Verarbeitung und Aufbereitung der Datenrahmen erzielt werden.

Vorteilhaft ist es bei einer Weiterbildung des beschriebenen Verfahrens vorgesehen, daß, falls die erste Verarbeitungseinrichtung einen Echtzeitdatenrahmen anhand der Kopfinformation identifiziert, dieser Datenrahmen einer Sonderbehandlung unterzogen wird, während gleichzeitig die Umsetzung durch die zweite Verarbeitungseinrichtung unterbunden wird. Auf diese Weise kann die zweite Verarbeitungseinrichtung für andere Rechenaufgaben eingesetzt werden, und es ist nicht notwendig, die durch die zweite Verarbeitungseinrichtung umgesetzten Datenrahmen später aus dem Datenstrom auszufiltern und zu verwerfen.

Besonders vorteilhaft werden bei einer Weiterbildung des beschriebenen Verfahrens die anhand der Kopfinformation des Datenrahmen identifizierten Echtzeitdaten an eine weitere dritte Verarbeitungseinrichtung weitergegeben, welche diese dann umsetzt. Durch diese Arbeitsteilung ist es möglich, einem erhöhten Kommunikationsaufkommen dadurch Rechnung zu tragen, daß der ersten Verarbeitungseinrichtung eine vermehrte Anzahl von dritten Verarbeitungseinrichtung für die Aufbereitung der Echtzeitdaten nachgeschaltet wird.

Besonders vorteilhaft werden bei einer Weiterbildung des beschriebenen Verfahrens Sprachdaten aufbereitet, die nach dem RTP-Protokoll gemäß dem Internet Protokoll (IP) auf dem Internet übertragen werden. Wobei die Kopfinformation der Datenrahmen nach bekannten RTP-Informationen durchsucht wird, um Echtzeitdatenrahmen zu identifizieren. Diese Variante des beschriebenen Verfahrens hat den Vorteil, daß bereits existierende Standards zurückgegriffen werden und ein standardbasierendes Produkt mit wenig proprietären Lösungen zur Verfügung gestellt werden kann.

Bei einer weiteren Variante des beschriebenen Verfahrens werden die Sprach-Echtzeitdaten durch digitale Signalprozessoren (DSP) in Sprache umgesetzt, wobei diese als dritte Verarbeitungseinrichtung vorgesehen sind, weil sich digitale Signalprozessoren für solche Umsetzaufgaben besonders gut eignen und diese schnell erledigen. Außerdem besteht die Möglichkeit, durch parallele Anordnungen der Signalprozessoren eine bedarfsgerechte Anpassung einer Anordnung zur Beschleunigung der Aufbereitung zu erzielen.

Bevorzugt wird bei der Umsetzung von Echtzeitdaten für den Versandt auf einem Computernetzwerk ein Verfahren angewandt, bei dem die Echtzeitinformation speziell für deren Umsetzung vorgesehenen Verarbeitungseinrichtungen zugeführt wird. Dort wird sie in Datenrahmen umgesetzt und gemäß dem Übertragungsprotokoll wird als Kopfinformation des Datenrahmens ein Echtzeitkennzeichen eingetragen. Auf diese Weise wird eine besonders schnelle Umsetzung der Echtzeitinformation in Echtzeitdaten mit möglichst geringem Aufwand bewerkstelligt.

Vorteilhaft wird bei einer Weiterbildung des beschriebenen Verfahrens der Datenrahmen für das Internetprotokoll (IP) aufbereitet, wobei als Echtzeitdaten Sprachdaten zur Anwendung kommen und dieser Datenrahmen um Protokollinformationen für das Internetprotokoll (IP) und das User Datagramm Protokoll (UDP) ergänzt wird, weil auf diese Weise ein völlig protokollkonformer Datenrahmen entsteht, welcher auch für Datenempfänger verarbeitbar ist, die nicht auf die RTP-Information im Datenrahmenkopf zugreifen können.

Bevorzugt kommt für die Übertragunsaufbereitung von Echtzeitdaten eine Anordnung zur Anwendung, die mindestens eine erste und eine zweite Verarbeitungseinrichtung zur Verarbeitung von Daten aufweist, wobei erste Mittel vorhanden sind, welche diesen Verarbeitungseinrichtungen die Echtzeitdaten parallel zuführen. Wobei in der ersten Verarbeitungseinrichtung ein Datenrahmen durch zweite Mittel auf eine in der Kopfinformation des Datenrahmens vorhandene Echtzeitkennung untersucht wird und falls dies der Fall ist, die zweiten Mittel die Abgabe eines ersten Signals veranlassen. Vorteilhaft sind weitere dritte und vierte Mittel vorhanden, mit welchen durch die erste Verarbeitungseinrichtung weitere Verarbeitungseinrichtungen angesteuert werden können, um die Aufbereitung der Echtzeitdaten optimal zu gestalten. Durch eine solche Anordnung wird eine Minimalkonfiguration zur Verfügung gestellt, welche mit technisch vertretbarem Aufwand eine Beschleunigte Aufbereitung von Echtzeitdaten gewährleistet.

Bevorzugt sind bei einer Weiterbildung der beschriebenen Anordnung die zweiten Mittel mit den dritten Mitteln verbunden, wobei die dritten Mittel nach Erhalt des ersten Signals von den zweiten Mitteln ein Signal erzeugen, um die Übertragungsaufbereitung durch die zweite Verarbeitungseinrichtung anzuhalten. Auf diese Weise wird sichergestellt, daß die Datenrahmen, welche Echtzeitinformationen enthalten, speziellen Verarbeitungseinrichtungen für die beschleunigte Aufbereitung dieser Datenrahmen zugeführt werden können und das keine redundante Datenaufbereitung erfolgt.

Bevorzugt sieht es eine Weiterbildung der beschriebenen Anordnung vor, daß vierte Mittel vorhanden sind, die der Weitergabe des Datenrahmens von der ersten Verarbeitungseinrichtung an eine dritte Verarbeitungseinrichtung dienen, wobei die zweiten Mittel infolge eines ersten Signals an die dritten Mittel ein Signal abgeben, worauf diese die Weitergabe der Echtzeitdaten an die dritte Verarbeitungseinrichtung veranlassen. Auf diese Weise wird eine schnelle Weitergabe von Echtzeitdaten an spezielle Verarbeitungseinrichtungen gewährleistet, während gleichzeitig die Doppelverarbeitung, d.h. die gleichzeitige Aufbereitung des selben Datenrahmens durch die erste und durch die dritte Verarbeitungseinrichtung unterbunden wird.

Bevorzugt ist bei einer Weiterbildung der beschriebenen Anordnung die dritte Verarbeitungseinrichtung als mindestens ein digitaler Signalprozessor ausgeführt, weil digitale Signalprozessoren frei programmierbar sind und für solche Aufbereitungsaufgaben besonders gut geeignet sind.

Bevorzugt ist bei einer Weiterbildung der beschriebenen Anordnung die zweite Verarbeitungseinrichtung in Form eines Standardmikroprozessors ausgestaltet, weil dieser besonders geeignet ist Steueraufgaben und Umsetzaufgaben zu übernehmen, die nicht in dem Maße zeitkritisch sind, wie die Aufbereitung von Echtzeitdaten.

Bevorzugt kommt bei einer weiter beschriebenen Anordnung ein Übertragungsmedium zum Einsatz, daß besonders für die Anwendung des Internetprotokolls (IP) als Kommunikationsprotokoll geeignet ist. Im Zusammenhang mit den Einsatz von Standardprotokollen kann so vorteilhaft eine auf Standards basierende Anordnung zur Verfügung gestellt werden, welche technisch einfacher realisierbar ist und ein attraktives Produkt darstellt.

Bevorzugt wird mit der Anordnung ein Verfahren zur Übertragungsaufbereitung von Echtzeitdaten ausgeführt, da die Anordnung speziell an die Erfordernisse der Übertragung und Aufbereitung von Echtzeitdaten über Computernetze, insbesondere von Sprachdaten über das Internetprotokoll und das Echtzeitprotokoll (RTP), angepaßt ist.

Im Folgenden wird die Erfindung anhand von Figuren und Ausführungsbeispielen weiter erläutert.
- Figur 1: zeigt ein Beispiel einer softwaretechnischen Lösung,
- Figur 2: zeigt ein Beispiel einer hardwaretechnischen Realisierung,
- Figur 3: zeigt ein Detailschema einer ersten Verarbeitungseinrichtung.

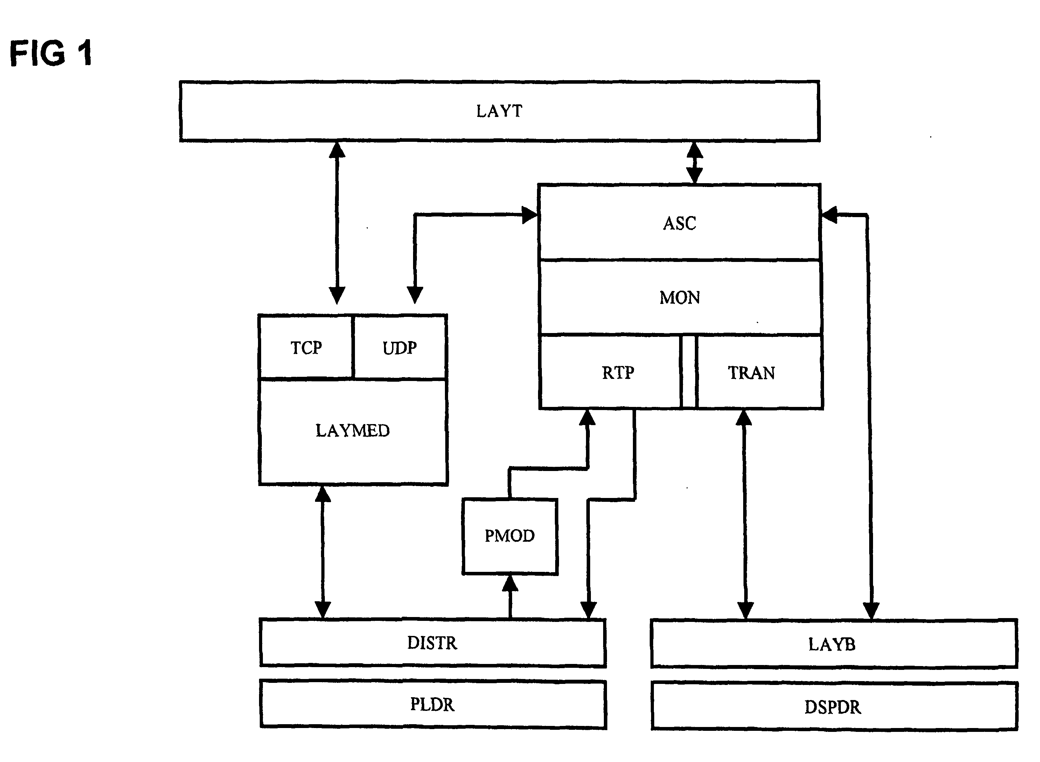

Figur 1 zeigt ein Beispiel einer softwaretechnischen Lösung für die Aufbereitung von Echtzeitdaten, durch welche die Kopfinformation von eintreffenden Datenrahmen daraufhin überprüft wird, ob es sich bei den Daten um spezielle nach dem RTP-Protokoll zu übertragende Daten handelt (Real Time Protokoll). Derartige Datenrahmen werden aus dem Kommunikationsstrom ausgefiltert und einer gesonderten Umsetzprozedur zugeführt, welche aus den übertragenen Daten wieder Sprach-, bzw. Videosignale generiert, die im Anschluß auf einem gängigem Kommunikationsnetz weiter übertragen werden können.

Von unten nach oben sind die Unterschiedlichen Protokollebenen des OSI-Schichtenmodells dargestellt. Ganz unten ist die physikalische Ebene LAYB, während sich beispielsweise oben LAYT, die Ebene 5 der Sitzungssteuerung befindet. Dazwischen auf Ebene 3 ist die Schicht LAYMED angesiedelt. Auf einem Übertragungsmedium eintreffende Echtzeitdatenrahmen werden von einem Treiber PLDR entgegengenommen, der beispielsweise den Internetbetrieb auf der physikalischen Ebene gewährleistet, und an einen Verteiler für die Weitergabe der Pakete DISTR weitergegeben. Gleichzeitig mit der Weitergabe an die Schicht LAYMED wird von einem Programmodul PMOD untersucht, ob eintreffende Datenrahmen in ihren Kopfinformationen Echtzeitkennungen, d.h. RTP-Informationen enthalten. In diesem Fall werden diese Datenpakete ausgefiltert und durch eine Transfereinrichtung TRAN einer speziellen Verarbeitungseinrichtung über LAYB zugeführt. Diese Verarbeitungseinrichtung kann beispielsweise gemäß dem Voice-Protokoll von H.323 API ausgeführt sein (ITU-T Standard). Die Protokollschicht kann dazu die so erhaltenen Echtzeitdaten an einen Treiber für spezielle Signalprozessoren DSPDR weitergeben, welcher die Echtzeitdaten beispielsweise an digitale Signalprozessoren oder an einen Mikroprozessor weiterleitet, der die Aufbereitung der Echtzeitdaten in Echtzeitinformationen vornimmt. Die dargestellten Programmodule ASC und MON dienen der Verwaltung und der Überwachung der Einrichtung.

Deutlich kann erkannt werden, daß durch die programmtechnische Realisierung der Aufbereitung die Transportschicht 4, in Form des TCP-, bzw. UDP-Protokolles umgangen wird, so daß bereits durch die softwaretechnische Realisierung , wegen der Verminderung des Protokollumsetzaufwandes eine Beschleunigung erzielt werden kann. Mit zunehmendem Echtzeitdatenaufkommen stößt die softwaretechnische Realisierung jedoch an ihre Grenzen, da die Auswertung der Echtzeitinformation durch das Modul PMOD die Weitergabe der Echtzeitinformation durch RTP und TRAN, sowie ggf. die Treiber für weitere Verarbeitungseinrichtungen LAYB und DSPDR durch ein und den selben Mikroprozessor ausgeführt werden müssen. Mit zunehmendem Kommunikationsaufkommen wird also der Durchsatz der aufbereiteten Datenrahmen von der Rechenkapazität des Mikroprozessors abhängig.

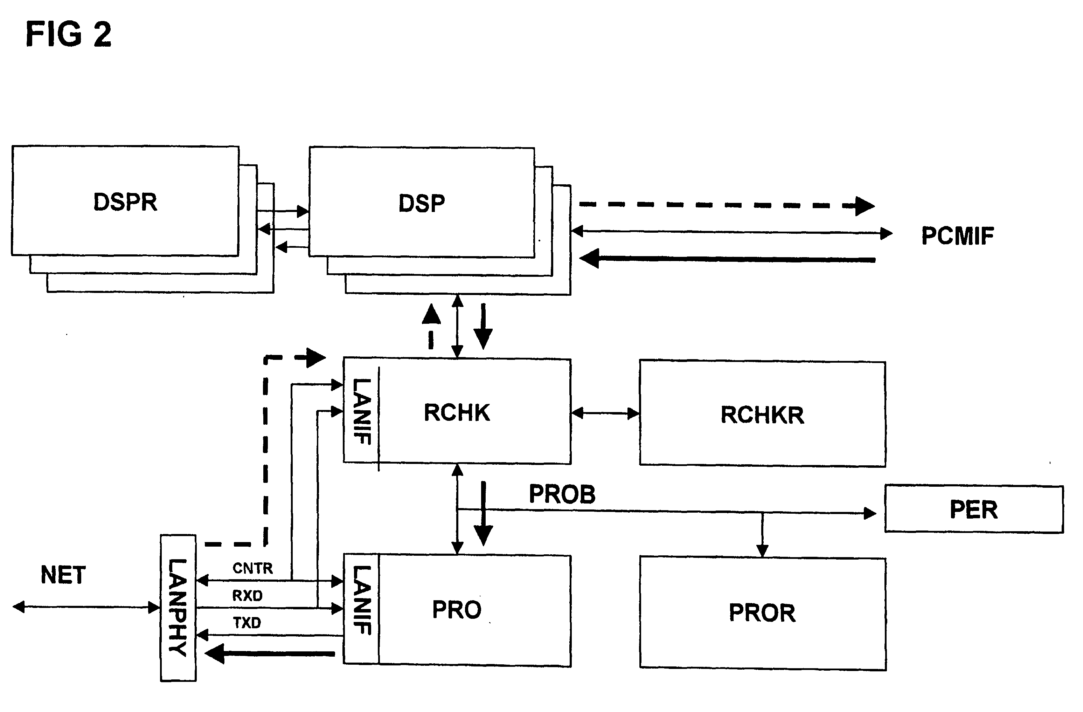

Figur 2 zeigt ein Blockschaltbild als Grundlage für die Ausführung eines Verfahrens oder eine Anordnung zur Übertragungsaufbereitung von Echtzeitdaten. Dargestellt sind ein DSPR als Speicher einer dritten Verarbeitungseinrichtung DSP, eine erste Verarbeitungseinrichtung RCHK, der Speicher einer ersten Verarbeitungseinrichtung RCHK sowie eine zweite Verarbeitungseinrichtung PRO, der Speicher einer zweiten Verarbeitungseinrichtung PROR, sowie ein Bus, der die unterschiedlichen Einrichtungen miteinander verbindet PROB und an diesen Bus zusätzlich angeschlossene Peripheriegeräte PER. Weiterhin sind Schnittstelleneinrichtungen LANIF angedeutet, die an der ersten und an der zweiten Verarbeitungseinrichtung vorgesehen sind. Ferner ist eine physikalische Schnittstelle zu einem Lokal Area Network LANPHY dargestellt, welche Daten aus dem Übertragungsmedium NET entgegennimmt, bzw. an dieses NET abgibt. Mit den gestrichelten Pfeilen ist der Paketdatenstrom in die Schaltungsanordnung und in das nachgeschaltete Kommunikationsnetz PCMIF angedeutet, welches beispielsweise ein ISDN Netz oder ein normales Telefonnetz sein kann. Mit den ununterbrochenen Pfeilen ist der entgegengerichtete Datenstrom aus dem Telefonnetz in Richtung des Übertragungsmediums NET dargestellt.

Das Übertragungsmedium NET kann beispielsweise als lokales Netzwerk oder Bus ausgeführt sein. Eingehende Datenleitungen sind sowohl mit der ersten als auch mit der zweiten Verarbeitungseinrichtung verbunden und mit RXD bezeichnet. Weiterhin sind ausgehende Datenleitungen vorhanden, die mit TXD bezeichnet sind. Ebenfalls sind Steuerleitungen CNTR vorgesehen, mit welchen der Kommunikationsablauf zwischen den Schnittstelleneinrichtungen LANPHY und LANIF gesteuert werden kann.

Auf dem Übertragungsmedium ankommende Datenrahmen werden an die erste und an die zweite Verarbeitungseinrichtung RCHK und PRO parallel weitergeleitet, wie dies in Figur 2 dargestellt ist. In der ersten Verarbeitungseinrichtung RCHK wird die Kopfinformation eines eintreffenden Datenrahmens daraufhin überprüft, ob sie RTP-Informationen enthält, d.h. ob dieser Datenrahmen nach dem Real Time Protokoll versendet werden soll. Alle übrigen Datenrahmen die nicht diese RTP Kopfinformation enthalten, werden von der zweiten Verarbeitungseinrichtung umgesetzt. Bei derartigen Datenrahmen handelt es sich also beispielsweise um die üblicherweise in einem Rechnernetz versandten Daten wie Dateien, Standbilddaten, elektronische Post, andere Internetzugriffe, usw.. Für den Fall, daß die erste Verarbeitungseinrichtung die Echtzeitkennung in der Kopfinformation des Datenrahmens identifiziert, filtert sie diesen Datenrahmen aus und unterbindet die Umsetzung des Datenrahmens durch die zweite Verarbeitungseinrichtung PRO. Um zeitliche Unstimmigkeiten beim Eintreffen der Datenrahmen zu kompensieren, werden diese ggf. in dem zugeordneten Speicher RCHKR abgelegt. Diejenigen Datenrahmen, die Echtzeitdaten enthalten, werden an eine dritte Verarbeitungseinrichtung DSP mit zugeordnetem Speicher DSPR weitergeleitet, welche aus diesen Echtzeitdaten Echtzeitinformationen generiert, die vorzugsweise an das nachgeordnete Weitverkehrsnetz WAN, wie durch die Richtungspfeile PCMIF angedeutet, weitergegeben wird.

Wie aus Figur 2 deutlich entnehmbar ist, nimmt die erste Verarbeitungseinrichtung eine zentrale Stellung in der Analyse und Steuerung des Aufbereitungsablaufs der Echtzeitdaten ein. Durch sie werden sowohl die zweite als auch die dritte Verarbeitungseinrichtung gesteuert, bzw. mit Daten bedient. Durch eine Anordnung von mehreren dritten Verarbeitungseinrichtungen in Verbindung mit zugeordneten Speichern kann ein erhöhter Durchsatz an Echtzeitdaten erreicht werden. Damit ist eine optimale modulare Anpassungsfähigkeit entsprechender Anordnungen an den jeweiligen Verarbeitungsbedarf gegeben. Da die erste Verarbeitungseinrichtung lediglich im wesentlichen eine Vergleichs- und Steuervorgang ausführen muß, für die bereits effiziente Hardwarelesungen vorliegen, kann durch diese Anordnung ein hoher Datendurchsatz gewährleistet werden.

In der umgekehrten Datenflußrichtung werden von PCMIF eintreffende Echtzeitinformationen in der dritten Verarbeitungseinrichtung in Echtzeitdaten umgesetzt um die entsprechende Echtzeitkennung im Datenrahmenkopf ergänzt in einen Datenrahmen eingefügt und ggf. um weitere Protokollinformationen für übergeordnete Protokollschichten, wie beispielsweise die Transportschicht ergänzt. Solche Informationen können beispielsweise die UDP-Information sein, die derartig versandte Nachrichten vollständig protokollkonform nach dem Standard erweitern und sie auch für Datenempfänger lesbar macht, die nicht auf die Echtzeitkennung zugreifen können.

Bevorzugt können durch ein beschriebenes Verfahren in einer solchen Anordnung 256 aktive RTP-Verbindungen pro Zeiteinheit verarbeitet werden. Eine derartige Aufbereitungsleistung ist, wie bereits in der Figurenbeschreibung zu Figur 1 erläutert, durch eine Softwarelösung nicht mehr erreichbar.

Ebenfalls kann der Datenrahmen um TCP-spezifische Protokollinformationen ergänzt werden (Transmission Control Protokoll).

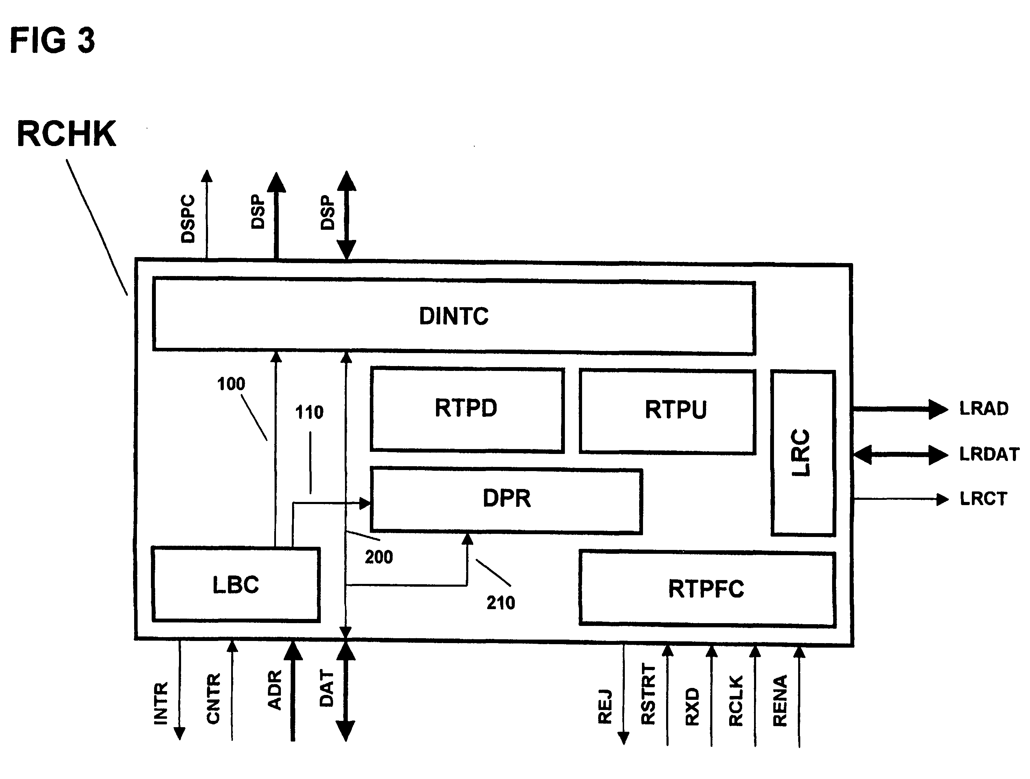

Figur 3 zeigt eine schematisierte Detailansicht der ersten Verarbeitungseinrichtung RCHK aus Figur 2. Insbesondere sind die unterschiedlichen Ein- und Ausgangsleitungen dargestellt. Die erste Verarbeitungseinrichtung RCHK kann vorzugsweise in Form eines applikationsspezifischen Bausteins oder eines feldprogrammierbaren Gatters (FPGA) ausgeführt sein.

In dieser ersten Verarbeitungseinrichtung sind eine lokale Bussteuerung LBC, Mittel zur Überprüfung der Echtzeitkennung RTPFC, eine Speicherzugriffsteuerung LRC, ein interner Speicher DPR, sowie eine Schnittstellensteuerung für die dritte Verarbeitungseinrichtung DINTC vorhanden. Weiterhin sind Verarbeitungsblöcke RTPD und RTPU für die unterschiedlichen Datenflußrichtungen der Echtzeitdaten vorgesehen. RTPU dient hierbei der Weitergabe der Echtzeitdaten an die dritte Verarbeitungseinrichtung, während RTPD die Echtzeitdaten von der dritten Verarbeitungseinrichtung in der anderen Datenflußrichtung entgegennimmt. Von der lokalen Bussteuerung LBC wird beispielsweise der Prozessor in der zweiten Verarbeitungseinrichtung mittels eines Datenstromes INTR gestoppt, falls die Mittel für die Identifikation der Echtzeitkennung im Kopf des Datenrahmens einen Datenrahmen mit Echtzeitdaten erkannt haben. Über CNTR kann die zweite Verarbeitungseinrichtung beispielsweise eine Quittung absenden. Über ADR und DAT werden Adressen und Daten zugeführt. Die Pfeilrichtung veranschaulicht dabei die Datenflußrichtung. Der Funktionseinheit RTPFC werden über Schnittstelleneinrichtungen LANIF Daten RSTRP, RXD, RCLK, RLA zuführbar und gibt Steuersignale über eine Datenleitung REJ weiter. Der in Figur 2 beschriebene Speicher RCHKR kann von LRC über entsprechende Leitungen LRAD (Adresse) LRDAT (Daten) und LRCT (Control) angesprochen werden. Interne Datenleitungen 100, 110, 200 und 210 versinnbildlichen einige Verbindungen innerhalb der ersten Verarbeitungseinrichtung, von denen nicht alle Dargestellt sind.

Beispielsweise werden von der Funktionseinrichtung RTPFC Echtzeitdaten in einem Datenrahmen identifiziert, indem diese die Kopfinformation des Datenrahmens auf das Vorhandensein von RTP-Informationen hin untersucht. Für den Fall, daß dieser Datenrahmen Echtzeitinformation enthält, wird über LBC die zweite Verarbeitungseinrichtung mittels eines nicht dargestellten ersten Signals gestoppt, damit diese den ihr parallel zugeführten Datenrahmen nicht ebenfalls aufbereitet.

RTPFC veranlaßt ggf. das Abspeichern dieses Datenrahmens im zugeordneten Speicher RCHKR über die Speichersteuerung LRC und die Weitergabe an die dritte Verarbeitungseinrichtung über Leitungen DSPA und DSPD, sowie die Steuerung des Aufbereitungsvorgangs über DSPC. Diese dritte Verarbeitungseinrichtung, die vorzugsweise als digitaler Signalprozessor ausgeführt ist, kann dann mit Hilfe eines speziell an den Datentyp angepaßten Programmes für die Aufbereitung der Echtzeitdaten in Echtzeitinformationen, diese Daten effizient in Informationen umsetzen, bzw. in der anderen Datenflußrichtung die Information in Daten umsetzen. Die Steuerung des Aufbereitungsvorganges kann durch die Steuereinrichtung DINTC auch für mehrere solcher dritten Verarbeitungseinrichtungen vorgenommen werden. In Abhängigkeit des vorhandenen Echtzeitkommunikationsaufkommens können bevorzugt bis zu 256 dritte Verarbeitungseinrichtungen vorgesehen sein.

Obwohl im Zusammenhang mit der Figurenbeschreibung immer wieder vom Internetprotokoll und Sprachdaten die Rede war, soll die Erfindung nicht so interpretiert werden, daß sie lediglich für Sprachdaten eingesetzt werden kann. Vielmehr soll jegliche Art von Echtzeitdaten, welche über beliebige Busse, lokale- und Weitverkehrsnetze übertragbar sind, von der Erfindung erfaßt werden.

## Patentansprüche

1. Verfahren zur Übertragungsaufbereitung von Echtzeitdaten, bei dem
- auf einem Übertragungsmedium (NET) ankommende Datenrahmen mindestens einer ersten Verarbeitungseinrichtung (RCHK) zugeführt werden,
- die erste Verarbeitungseinrichtung (RCHK) eine für einen ersten Datenrahmen vorhandene Kopfinformation daraufhin überprüft, ob diese ein Kennzeichen für Echtzeitdaten enthält,
- die erste Verarbeitungseinrichtung (RCHK) die Aufbereitung des ersten Datenrahmens veranlaßt, falls die erste Kopfinformation das Kennzeichen enthält,
**dadurch gekennzeichnet, daß**
- die auf dem Übertragungsmedium (NET) ankommende Datenrahmen parallel mindestens der ersten und einer zweiten Verarbeitungseinrichtung (RCHK, PRO) zugeführt werden,
- die erste Verarbeitungseinrichtung (RCHK) für den Fall, daß das Kennzeichen vorhanden ist, veranlaßt, daß die zweite Verarbeitungseinrichtung (PRO) den Datenrahmen nicht aufbereitet.

2. Verfahren nach Anspruch 1,
bei dem mindestens eine dritte Verarbeitungseinrichtung (DSP) zur Aufbereitung veranlaßt wird, wobei die Echtzeitdaten an diese weitergegeben werden.

3. Verfahren nach einem der Ansprüche 1 oder 2,
bei dem Echtzeitdaten in Form von Sprachdaten aufbereitet werden, wobei auf dem Übertragungsmedium (NET) Datenrahmen nach dem Internetprotokoll (IP) übertragen werden und als Kennzeichen nach RTP-Information gesucht wird.

4. Verfahren nach Anspruch 3,
bei dem Sprachdaten als Sprache aufbereitet werden.

5. Anordnung zur Übertragungsaufbereitung von Echtzeitdaten in Form von Datenrahmen,
a) die mindestens eine erste und eine zweite Verarbeitungseinrichtung (RCHK, PRO) zur Verarbeitung von Daten aufweist,
b) die erste Mittel zur parallelen Zulieferung von Daten zu den Verarbeitungseinrichtungen aufweist (CNTR, RXD),
c) die in der ersten Verarbeitungseinrichtung (RCHK) zweite Mittel (RTPFC) aufweist zur Untersuchung einer für einen Datenrahmen vorhandenen Kopfinformation auf ein Echtzeitdatenkennzeichen, die in diesem Fall die Abgabe eines ersten Signales veranlassen,
d) und die dritte und/oder vierte Mittel (DINTC, LBC) zur Steuerung einer weiteren Verarbeitungseinrichtung (DSP, PRO) durch die erste Verarbeitungseinrichtung (RCHK) aufweist und welche mit weiteren Verarbeitungseinrichtungen mindestens durch Steuerleitungen (DSPC, INTR) verbunden ist,
e) und bei der die erste Verarbeitungseinrichtung (RCHK) derart ausgestaltet ist, daß für den Fall, daß das Kennzeichen vorhanden ist, die erste Verarbeitungseinrichtung (RCHK) veranlaßt, daß die zweite Verarbeitungseinrichtung (PRO) den Datenrahmen nicht aufbereitet.

6. Anordnung nach Anspruch 5,
bei der die zweiten Mittel (RTPFC) mit den dritten Mitteln (LBC) verbunden sind und die dritten Mittel (LBC) zum Erzeugen eines zweiten Signals (INTR) nach Erhalt des ersten Signales von den zweiten Mitteln (RTPFC) und zum Anhalten der Übertragungsaufbereitung des Datenrahmens durch die zweite Verarbeitungseinrichtung (PRO) ausgestaltet sind.

7. Anordnung nach einem der Ansprüche 5 oder 6,
bei der die vierten Mittel (DINTC) für die Weitergabe eines Datenrahmens von der ersten Verarbeitungseinrichtung (RCHK) mindestens an eine dritte Verarbeitungseinrichtung (DSP) ausgestaltet sind, bei der die zweiten Mittel (RTPFC) zum Abgeben eines Signals an die vierten Mittel (DINTC) in Folge des ersten Signales und bei der die vierten Mittel zum Weitergeben des Datenrahmens an die dritte Verarbeitungseinrichtung (DSP) ausgestaltet sind.

8. Anordnung nach einem der Ansprüche 5 bis 7,
bei der die dritte Verarbeitungseinrichtung (DSP) als mindestens ein digitaler Signalprozessor ausgeführt ist.

9. Anordnung nach einem der Ansprüche 5 bis 8,
bei der die zweite Verarbeitungseinrichtung (PRO) als Mikroprozessor ausgestaltet ist.

10. Anordnung nach einem der Ansprüche 5 bis 9,
bei der das Übertragungsmedium (NET) so ausgestaltet ist, daß es für das Internetprotokoll als Kommunikationsprotokoll geeignet ist.

## Claims

1. Method for the transmission editing of real-time data, whereby
- at least one first processing device (RCHK) is applied to data frames arriving on a transmission medium (NET),
- the first processing device (RCHK) checks header information present for a first data frame to determine whether this contains an identifier for real-time data,
- the first processing device (RCHK) initiates the editing of the first data frame if the first header information contains the identifier,
**characterised in that**
- the data frames arriving on the transmission medium (NET) are applied in parallel to at least the first and a second processing device (RCHK, PRO),
- the first processing device (RCHK), in a case where the identifier is present, ensures that the second processing device (PRO) does not edit the data frame.

2. Method in accordance with claim 1,
whereby at least a third processing device (DSP) is activated for editing, with the real-time data being forwarded to same.

3. Method in accordance with one of claims 1 or 2,
whereby real-time data is edited in the form of voice data, with data frames being transmitted on the transmission medium (NET) in accordance with the Internet protocol (IP) and searched as identifiers for RTP information.

4. Method in accordance with claim 3
whereby voice data is edited as speech.

5. Arrangement for the transmission editing of real-time data in the form of data frames,
a) that has at least a first and a second processing device (RCHK, PRO) for processing data,
b) that has first means for parallel supply of data to the processing devices (CNTR, RXD),
c) that in the first processing device (RCHK) has second means (RTPFC) to examine header information for a real-time identifier present for a data frame, which information in this case activates the output of a first signal,
d) and that has third and/or means (DINTC, LBC) for the control of a further processing device (DSP, PRO) by the first processing device (RCHK) and that is connected to further processing devices at least by control lines (DSPC, INTR)
e) and whereby the first processing device (RCHK) is designed in such a way that where the identifier is present the first processing device (RCHK) then ensures that the second processing device (PRO) does not edit the data frame.

6. Arrangement in accordance with claim 5,
whereby the second means (RTPFC) is connected to the third means (LBC) and the third means (LBC) is designed to generate a second signal (INTR) after receipt of the first signal from the second means (RTPFC) and to stop the transmission editing of the data frame by the second processing device (PRO).

7. Arrangement in accordance with one of claims 5 or 6
whereby the fourth means (DINTC) is designed for the forwarding of a data frame from the first processing device (RCHK) to at least a third processing device (DSP), with the second means (RTPFC) being designed to output a signal to the fourth means (DINTC) as the result of the first signal and with the fourth means being designed to forward the data frame to the third processing device (DSP)

8. Arrangement in accordance with one of claims 5 to 7, whereby the third processing device (DSP) is designed as at least a digital signal processor.

9. Arrangement in accordance with one of claims 5 to 8, whereby the second processing device (PRO) is designed as a microprocessor.

10. Arrangement in accordance with one of claims 5 to 9 whereby the transmission medium (NET) is designed in such a way that it is suitable as a communication protocol for the Internet protocol.

## Revendications

1. Procédé pour la préparation à la transmission de données en temps réel, dans lequel
- les trames de données arrivant sur un milieu de transmission (NET) sont amenées à au moins un premier dispositif de traitement (RCHK),
- le premier dispositif de traitement (RCHK) contrôle ensuite une information d'en-tête présente pour une première trame de données pour voir si elle contient un indicateur pour des données en temps réel,
- le premier dispositif de traitement (RCHK) déclenche la préparation de la première trame de données dans le cas où la première information d'en-tête contient l'indicateur,
**caractérisé en ce que**
- les trames de données arrivant sur le milieu de transmission (NET) sont amenées en parallèle au moins au premier et à un deuxième dispositifs de traitement (RCHK, PRO),
- le premier dispositif de traitement (RCHK) fait en sorte, en cas de présence de l'indicateur, que le deuxième dispositif de traitement (PRO) ne prépare pas la trame de données.

2. Procédé selon la revendication 1,
dans lequel au moins un troisième dispositif de traitement (DSP) est amené à procéder à la préparation, les données en temps réel lui étant transmises.

3. Procédé selon l'une des revendications 1 ou 2,
dans lequel les données en temps réel sont préparées sous forme de données vocales, des trames de données étant transmises sur le milieu de transmission (NET) conformément au protocole Internet (IP) et une information RTP étant recherchée en tant qu'indicateur.

4. Procédé selon la revendication 3,
dans lequel des données vocales sont préparées en tant que parole.

5. Arrangement pour la préparation à la transmission de données en temps réel sous forme de trames de données,
a) qui comprend au moins un premier et un deuxième dispositifs de traitement (RCHK, PRO) pour le traitement de données,
b) qui comprend des premiers moyens pour la livraison parallèle de données aux dispositifs de traitement (CNTR, RXD),
c) qui comprend, dans le premier dispositif de traitement (RCHK), des deuxièmes moyens (RTPFC) pour analyser une information d'en-tête présente pour une trame de données à la recherche d'un indicateur de données en temps réel, lesquels moyens déclenchent, dans ce cas, l'émission d'un premier signal,
d) et qui comprend des troisièmes et/ou quatrièmes moyens (DINTC, LBC) pour la commande d'un autre dispositif de traitement (DSP, PRO) par le premier dispositif de traitement (RCHK), qui est relié à d'autres dispositifs de traitement au moins par des lignes de commande (DSPC, INTR)
e) et dans lequel le premier dispositif de traitement (RCHK) est exécuté de manière à ce que, en cas de présence de l'indicateur, le premier dispositif de traitement (RCHK) fasse en sorte que le deuxième dispositif de traitement (PRO) ne prépare pas la trame de données.

6. Arrangement selon la revendication 5,
dans lequel les deuxièmes moyens (RTPFC) sont reliés aux troisièmes moyens (LBC) et les troisièmes moyens (LBC) sont exécutés pour produire un second signal (INTR) après la réception du premier signal des deuxièmes moyens (RTPFC) et pour stopper la préparation à la transmission de la trame de données par le deuxième dispositif de traitement (PRO).

7. Arrangement selon l'une des revendications 5 ou 6,
dans lequel les quatrièmes moyens (DINTC) sont exécutés pour la transmission d'une trame de données du premier dispositif de traitement (RCHK) à au moins un troisième dispositif de traitement (DSP), dans lequel les deuxièmes moyens (RTPFC) sont exécutés pour délivrer un signal aux quatrièmes moyens (DINTC) suite au premier signal, et dans lequel les quatrièmes moyens sont exécutés pour transmettre la trame de données au troisième dispositif de traitement (DSP).

8. Arrangement selon l'une des revendications 5 à 7,
dans lequel le troisième dispositif de traitement (DSP) est exécuté en tant qu'au moins un processeur de signaux numérique.

9. Arrangement selon l'une des revendications 5 à 8,
dans lequel le deuxième dispositif de traitement (PRO) est exécuté en tant que microprocesseur.

10. Arrangement selon l'une des revendications 5 à 9,
dans lequel le milieu de transmission (NET) est exécuté de manière à être adapté pour le protocole Internet en tant que protocole de communication.
